# EUROPEAN PATENT SPECIFICATION

(11) **EP 0 594 550 B1**
(45) Date of publication and mention of the grant of the patent: **12.08.1998**
(21) Application number: 93850194.7
(22) Date of filing: 14.10.1993
(51) Int. Cl.: G01P 3/44

(54) **Method and device for recording operating data in a bearing**
Verfahren und Vorrichtung zur Messung von Betriebszuständen in einem Lager
Procédé et dispositif pour relever les charactéristiques de l'état de fonctionnement dans un palier

(30) Priority: 19.10.1992 SE 9203052; 19.10.1992 SE 9203053
(43) Date of publication of application: 27.04.1994
(73) Proprietor: AB SKF, S-415 50 Göteborg (SE)
(72) Inventor: Ekdahl, Egon, S-434 91 Kungsbacka (SE); Wikström, Bo, S-261 75 Asmundtorp (SE); Berryman, Les, NL-4133 CM Vianen (NL); Carlsson, Olof, S-226 47 Lund (SE)
(74) Representative: Petri, Stellan

(56) References cited:
- WO-A-89/01093
- DE-A- 2 551 882
- US-A- 4 069 435
- PATENT ABSTRACTS OF JAPAN vol. 5, no. 196 (P-93)12 December 1981 & JP-A-56 118 640 (HITACHI LTD.)

## Description

### Technical field

The invention relates to a method and a device in a bearing for generating current and for a recording of current operating data of said bearing.

### Background art

For some time there has been an interest of recording operating data of different structural members in mechanical apparators and devices. This applies for instance to bearings which normally form key elements in many different types of constructions. By recording such operating data harmful operating conditions and peak stresses can be identified at an early stage and hopefully be avoided. Thereby it is possible to increase dramatically the length of the life of the structural member, and the costs for service and maintenance can be kept low.

The measuring means that are used for recording current operating data of the bearing can be made of a simple type and complete passive but in more advanced applications or applications in which the technical requirements are higher the measuring means are more complex and normally require some kind of power supply. The power supply can be provided either by a battery arranged in the vicinity of said means or by cable from a centrally arranged power supply means.

In a case where said structural member is hard to reach and/or the power consumption thereof is comparatively large a power supply by means of a battery is less suitable and involves large costs in maintenance and in the exchange of used batteries. In many applications the environment in which the structural member exists is such that there are large problems to provide the cabling from the power supply means, and the environment can also result in a large wear of cables and connecting means or that disturbances in the power supply voltage affect the measuring results.
Therefore, it would be indeed desirable if the power supply could be accomplished more directly in connection with the structural member, such as a bearing.

With regard to prior art bearings it is previously known to record temperatures that are critical to the bearing by means of a temperature gauge which is arranged to engage a suitable section of the bearing or the bearing housing. Such a device is disclosed in US-A-4,812,826. The device is composed of a standard bolt of standard dimensions in which is arranged a temperature sensing element and an antenna, the latter being projected from said bolt when a predetermined temperature is recorded by said element. The device according to US-A-4,812,826 will provide an indication that said bearing at some moment has obtained said predetermined temperature. It is not possible to provide a continuous indication of the present temperature.

In railway applications it is previously known for a long time to sense contactless the temperature of the bearing boxes of the train and the railway-carriages. In such applications IR detectors are mounted on the ground very close to the railway to sense the temperature of the bearing boxes when these pass the detectors. Information of excess temperatures in specific bearing boxes are passed on to different types of indicating means arranged along the railway. The engine-driver, or other operators, may then read the information and act correspondingly, for instance by exchanging a bearing or disconnecting a carriage having a bearing that is overheated or damaged. This method allows only an indirect sensing of the temperature of the bearing and many factors influence the sensing of the temperature and the transmission of the information regarding the temperature to any appropriate personnel.

According to prior art technique it is also known to monitor other operating data of bearings. US-A-4,069,435 for instance discloses a device in a bearing for sensing the relative rotational speed of different elements of the bearing. Said device comprises a coil which is mounted in the sealing means of the bearing axially displaced from the balls of the bearing at the same radius as the balls from the center of the bearing. A permanent magnet is received in said coil, and said magnet generates a magnetic field extending over the balls of the bearing. When the bearing rotates the balls of the bearing pass through said magnetic field and the field is disturbed. The disturbance in turn generates a current in said coil and by recording the variation of said current a signal is obtained which is proportional to the rotational speed of said bearing. The signal from said coil is then passed on to some kind of recording unit through a wire connection. Said patent does not disclose nor point in the direction of utilizing the device for generating electric current to supply measuring means or similar devices.

A way of providing power to a self-powered monitor unit is disclosed in US-A-4,237,454. Said monitor including a tuned mechanical resonator and a radio transmitter is mounted on rotating equipment to be monitored, for instance a ball bearing. The resonator includes a piezo-ceramic element which generates a high voltage, low current electrical power to drive different elements of said monitor. The monitor according to US-A-4,237,454 is mounted on stationary housing at a position to sense structure-borne vibrations emanating from the bearing.

### Summary of the invention

An object of the present invention is to overcome as far as possible drawbacks and disadvantages indicated above of prior art systems for indicating and recording operating data of structural members. The method according to the invention accomplishes a local processing of measuring signals that are obtained from sensors mounted within the bearing or in the vicinity thereof, and also that any process signals are transmitted from the processing spot to recording means arranged remotely of said spot.

Another object is to avoid drawbacks and disadvantages of prior art systems for generating electric current to power measuring means in structural member.

The above-mentioned objects are achieved according to the invention by transforming locally within sealing means of the bearing measuring signals to measured values and by transmitting in an intermittent way said measured values to a remote recording means. The measured signals are transformed in a central unit and transmitted by a transmitting means operatively connected to said central unit. In one aspect of the invention said central unit and said transmitting means are operatively connected to an electric generator which is integrated in the bearing within sealing means of the bearing.

Further objects and features of the present invention are apparent from the following description and drawings together with the dependent claims.

### Brief description of the drawings

The invention will be described in more detail by means of embodiments with reference to the accompanying drawings, in which
FIG 1 is a block diagram showing a device according to the invention,
FIG 2 is a schematic cross sectional view of the device according to FIG 1 mounted in a bearing,
FIG 3 schematically shows one embodiment of a generator included in the device according to the invention,
FIG 4 schematically shows an alternative embodiment of said generator,
FIG 5 schematically shows a further embodiment of a generator,
FIG 6 is a block diagram showing an electric circuit connected to the generators of FIGs 3-5,
FIG 7 is a side view showing schematically one embodiment of a generator according to FIG 5, and
FIG 8 is a block diagram showing a central unit included in the device according to the invention.

### Detailed description of the invention

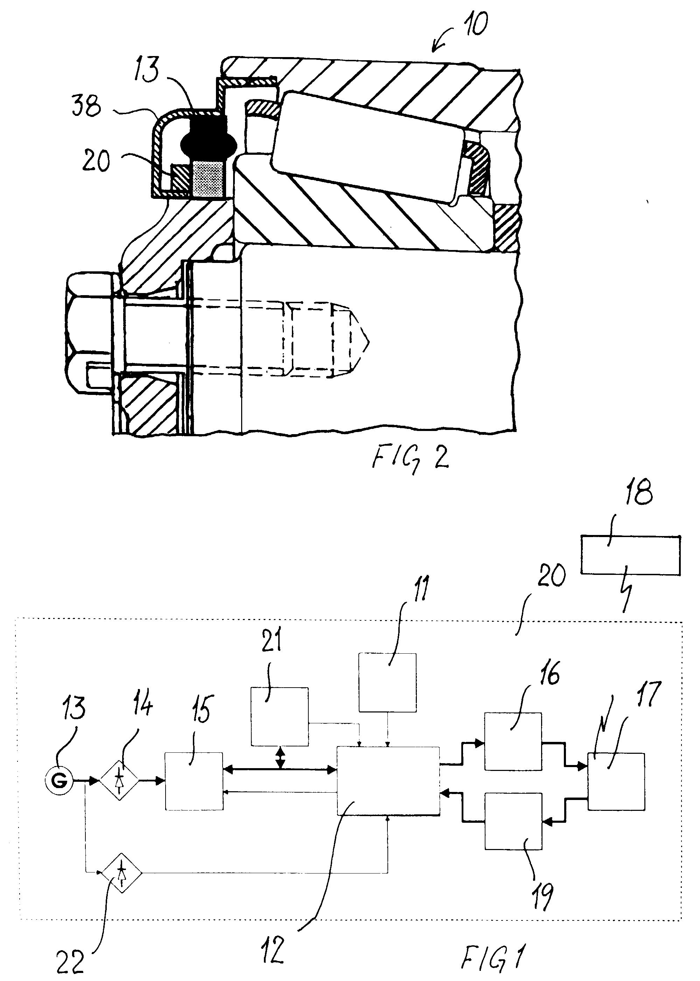

FIG 1 shows a device according to the invention to be mounted in a bearing 10 (see FIG 2), the device including a sensor 11 for sensing for instance temperature. Said sensor 11 is operatively connected to a central unit 12. Said central unit includes a plurality of memory units (not shown) together with calculating means for transforming measured signals received from said sensor 11. Said calculating means comprises preferably buffert means and an analog-digital transformer. The electric energy required to supply said central unit 12 and normally also said sensor 11 is generated in a generator 13 which is operatively connected to said central unit 12 through a rectifier circuit 14 and a voltage regulator 15. Measured signals processed or transformed in said central unit are fed according to the invention to a superior processing or indicating means, said superior means can be arranged anywhere in the vehicle in which said bearing 10 is mounted or in a driving vehicle connected to said vehicle. According to a preferred embodiment of the invention said transformed measured signals are transferred by a wireless connection by means of a transmitter 16 operatively connected to said central unit 12, said transmitter 16 in turn being operatively connected to an antenna 17. Through said antenna 17 said device 20 has a wireless connection to a remote recording means 18 thus forming the superior processing means.

According to the invention it is also possible to control the function of the central unit and thereby to vary the method of measuring and recording in any desired way. To accomplish this the device according to the invention is provided with a receiver 19 operatively connected to said antenna 17 as well as to said central unit 12.

As the device according to the invention preferably should be used in bearings and as said generator 13 is mounted within said bearing in such a way that electric current is generated in said generator when said bearing rotates the power supply of the central unit 12 should be ensured also during an idle condition, that is when the bearing does not rotate. The power supply is ensured also during such conditions by means of a battery unit 21. Preferably said battery unit 21 comprises one or a plurality of storage cells or accumulator batteries which are recharged by said generator through said rectifier 14 and said voltage regulator 15. In a preferred embodiment the processing capacity of said central unit 12 is used also to control said generator and/or said voltage regulator to accomplish charging and maintenance charging of said storage cell of the battery unit 21 in the best possible way.

According to the invention also other operating data than the temperature can be recorded. Other sensors that can be mounted within the bearing or in the vicinity thereof are sensors for vibrations, sound, stress forces, pressure and torque. Different types of sensors can be provided but as a result of the measured signals from said sensors being processed and transformed in said central unit 12 all sensors can be looked on by said recording means 18 as sensors of a uniform type. FIG 1 also shows a possibility to measure and record by means of said generator 13 the rotational speed of the bearing 10 or a shaft connected thereto. According to the invention the rotational speed is measured by feeding current pulses from said generator 13 to said central unit 12 through some type of buffert or filter 22. By means of said central unit 12 it is then possible to calculate the average speed, speed changes of the bearing, the absolute speed, and other data related thereto.

FIG 2 shows the mounting of the device 20 in a bearing 10. Said device 20 as well as said generator 13 are enclosed by sealing means 38 provided in the bearing. Said sealing means 38 can be of a conventional type or formed specifically to receive in an appropriate way the device 20 and the generator 13.

FIGs 3-5 show schematically alternative embodiments of said generator 13. The embodiment of the generator 13 shown in FIG 3 comprises an iron core 23 and a winding 24 surrounding said core. Radially outside said iron core 23 a ring is arranged on which mutually spaced permanent magnets 25 are attached. Radially between said iron core 23 and said ring with permanent magnets 25 there is arranged a movable disc or ring having metal discs or metal blades. Said disc or ring rotates together with said bearing at the rotational speed of the bearing.

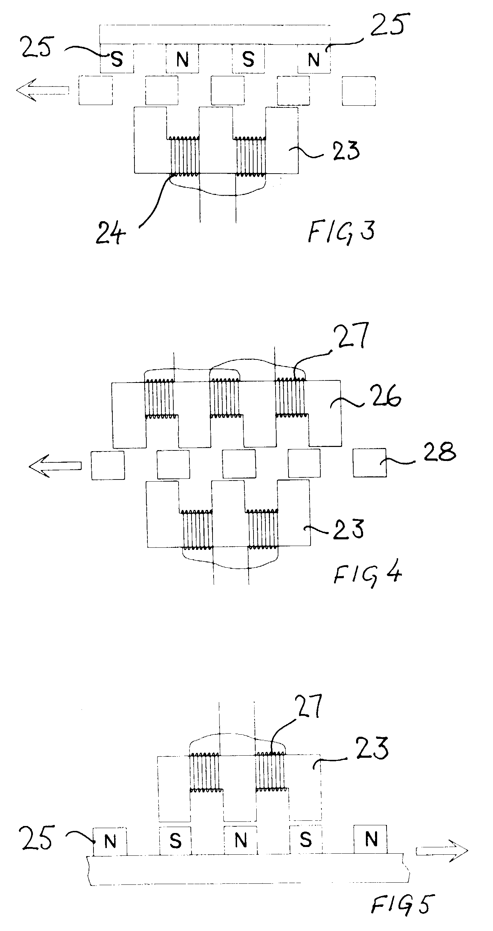

An alternative embodiment of said generator 13 is shown in FIG 4. The generator 13 is provided with a separate excitation by means of a second iron core 26 with associated windings 27. Both iron cores 23 and 26 are fixedly mounted peripherally in the bearing. Between said both iron cores 23 and 26 a ring extends on which is mounted mutually spaced metal blades or metal plates.

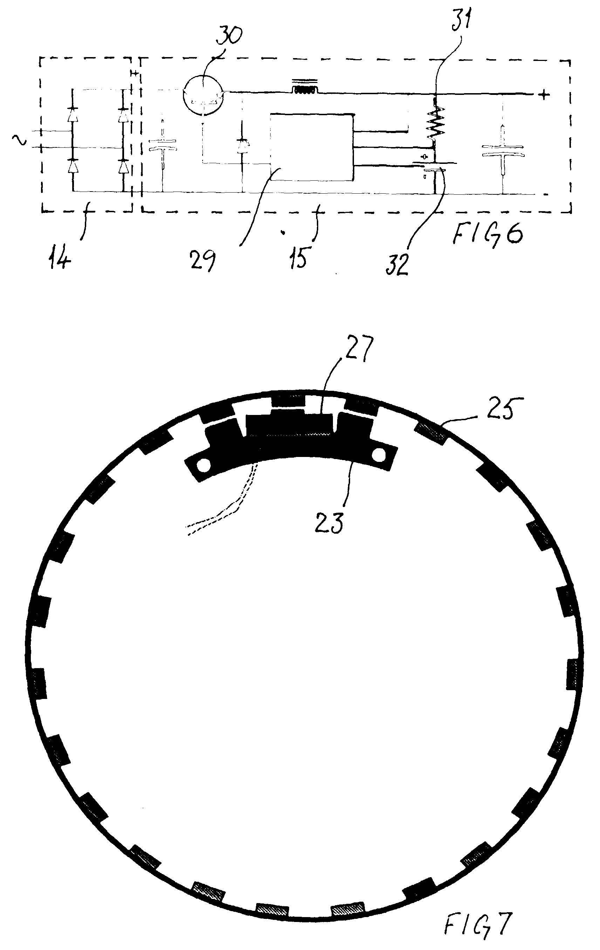

The generator according to FIG 5 comprises an iron core 23 on which a winding 24 is provided. Said iron core 23 and said winding 24 are mounted in a peripheral section of a non-rotating part of the bearing. Outside thereof and on a rotating part of the bearing a number of permanent magnets 25 are arranged. Said permanent magnets 25 are arranged on a circle line and preferably cover the complete circumference. However, it is possible also to provide said permanent magnets 25 on a sector only.

The different types of generators disclosed above all generate a pulsating alternating current which is rectified in said rectifier 14, compare FIG 1. By phase shifting said windings 27 it is possible to obtain a large number of pulses at each revolution without the necessity of arranging a large number of magnet 25.

To ensure best possible charge conditions in said battery unit 15 a control circuit 29 is provided therein. The rectifier 14 shown in FIG 6 is formed as a rectifier bridge. The current from said rectifier bridge is fed through a transistor 30 and a resistor 31 to a accumulator 32, preferrably being a type of nickel-kadmium battery. Current operating conditions of the accumulator 13 such as the temperature, charging current and surface voltage are continuously monitored by the control circuit 29. Said control circuit 29 controls through said transistor 30 the charging current in dependence of the operating data of the accumulator.

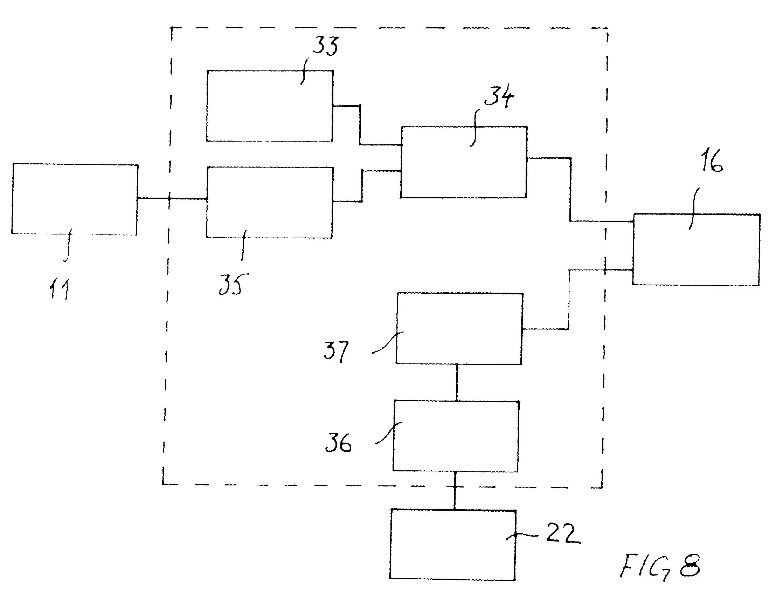

A basic practical embodiment of the generator 13 is shown in FIG 7. The iron core 23 is fixedly mounted in a non-moving section of the bearing and receives the winding 27. A plurality of permanent magnet 25 are mutually spaced on a ring connected to a rotating section of the bearing. The ring is arranged so that said permanent magnets 25 pass the poles of the iron core 23 at some air-gap.

In applications where the bearing rotates essentially continuously the accumulator 32 may be omitted or exchanged to a capacitor to ensure some supply current even during idle conditions.

Preferrably the communication between the transmitter 16 and the recording unit 18 and through the receiver 19 and the recording unit 18 is made by radio through the antenna 17 but also other wireless transmission methods can be used. In some conditions it may for instance be appropriate to use IR-light. In some specific favourable conditions it may also be possible to carry out the communication by wire, and in such cases the antenna 17 is omitted.

The central unit 12 comprises according to FIG 8 a first memory means 33 storing limit values and similar data indicating pre-determined conditions for the bearing. Examples of such data are the maximum bearing temperature, the runtime between points of maintenance, and maximum allowed forces in the bearing. Preferably said memory means 33 includes also a code or an address that is unique to the bearing and provides the bearing with an identity. Such identity data can be used to investigate by means of specific service terminals the status of elected bearings in an apparatus or a vehicle. Said address data can also be included in the signals transmitted from the transmitter 16. In such a way a recording means 18 may serve a plurality of bearings. It is also possible to utilize the address data to identify the complete vehicle.

Said memory means 33 is operatively connected to a comparator 34 in which data stored in said memory means 33 are compared to measured data. Warning signals and corresponding data are interchanged through a connection between comparator 34 and said transmitter 16 if measured operating data deviate incorrectly from stored data.

Said central unit 12 also comprises a second memory means 35 for storing measured values generated as measured signals by the sensors. Measured data are stored partly to be transmitted in an intermittent way or as a response on requests from the recording unit 18 or another corresponding unit and partly to be compared to values stored in said first memory means.

Signals provided by the filter or buffert 22 relating to the rotation of the bearing are fed through a connection to a timing means 36 included in said central unit 12, said timing means being operatively connected to a calculating means 37 also included in said central unit 12. In said calculating means 37 rotating time and similar data concerning the bearing are determined and then the rotational speed of the bearing can be calculated. Said calculating means 37 may also continuously accumulate operating periods of the bearing so as to keep information about the total runtime of the bearing available at all times.

The means included in said central unit 12 can be implemented in hardware as separate or partly combined integrated circuits. When the dimensions are small the integrated circuits are exchanged by chips directly mounted on circuit boards or silicone plates. It is possible also to implement some units as software in a general computer circuit.

The device described above can be modified in many ways within the scope of the claimed invention.

## Claims

1. A method for recording current operational data of a bearing (10) such as the rotational speed or the temperature of the bearing, said-operational data being obtained locally at the bearing as at least one electric signal, **characterized** in that said electric signal is processed locally within a sealed space (38) in the bearing to produce at least one measured value, and that said measured value is transmitted intermittently by wireless transmission from the bearing to at least one recording means remote from the bearing and is recorded.

2. A method according to claim 1,
**characterized** in that at least one limit value is stored locally at the bearing (10), said limit value forming the limit for a variation of said measured value.

3. A method according to claim 1 or 2,
**characterized** in that said measured value is stored continuously locally at said bearing (10), and that said measured value is transmitted to said recording means responsive to an external command from the recording means.

4. Method according to any of claims 1-3,
**characterized** in that an electric signal responsive to the operating temperature of said bearing is obtained from a temperature sensitive section of the bearing.

5. A method according to any of claims 3-4,
**characterized** in that rotation of said bearing is sensed, that time periods during which said bearing rotates are recorded, and that a total value formed by the sum of said periods is stored continuously.

6. A device for recording operational current data of a bearing (10), such as rotational speed and temperature of the bearing, comprising sealing means (38) mounted in the bearing (10) to enclose a space therein, and at least one sensor (11) for generating locally an electric signal representing said operational data,
**characterized** by a central unit (12) disposed within said space and operatively connected to said sensor (11) for transforming the electric signal to measured values, and transmitter means (16) disposed within said space and operatively connected to said central unit (12) for wireless transmission of said measured values to at least one recording means remote from said space.

7. A device according to claim 6,
**characterized** in that said central unit (12) comprises first memory means (33) for storing limit values that said measured value may vary within, and comparator means (34) for comparing said measured value to said limit values, and that said comparator means is operatively connected to said transmitter means (16) for transmitting a signal to said recording means if said measured value falls outside said limit values.

8. A device according to claim 6 and 7,
**characterized** in that said central unit (12) comprises second memory means (35) for storing said measured values, and that receiver means (19) is operatively connected to said central unit (12) and to said recording means (18) for receiving control signals from the recording means (18), said control signals instructing said central unit (12) to transmit measured values to said recording means (18).

9. A device according to any of claims 6-8,
**characterized** in that at least one temperature sensor (11) is mounted in a temperature sensitive section of the bearing or engaging such a section, and that said temperature sensor (11) is operatively connected to said central unit (12).

10. A device according to any of claims 6-8,
**characterized** by a generator (13) having a rotor engaging a rotating section of said bearing, and a stator engaging a non-rotating section of said bearing, or vice versa, for generating current pulses when said bearing rotates, said central unit (12) comprising time measuring means for measuring the time period between current pulses, and calculating means for calculating the rotational speed of said bearing based on said measured time period between said current pulses.

## Patentansprüche

1. Verfahren zum Aufzeichnen laufender Betriebsdaten eines Lagers (10), beispielsweise der Drehzahl oder der Temperatur des Lagers, welche Betriebsdaten vor Ort an dem Lager in Form zumindest eines elektrischen Signals erhalten werden, **dadurch gekennzeichnet,** daß das elektrische Signal vor Ort in einem abgedichteten Raum (38) in dem Lager verarbeitet wird, um mindestens einen Meßwert zu erzeugen, und daß der Meßwert intermittierend drahtlos von dem Lager zu mindestens einer Aufzeichnungseinrichtung entfernt von dem Lager übertragen und aufgezeichnet wird.

2. Verfahren nach Anspruch 1, **dadurch gekennzeichnet,** daß mindestens ein Grenzwert vor Ort an dem Lager (10) gespeichert ist, wobei der Grenzwert die Grenze für eine Änderung des Meßwerts darstellt.

3. Verfahren nach Anspruch 1 oder 2, **dadurch gekennzeichnet,** daß der Meßwert kontinuierlich vor Ort in dem Lager (10) gespeichert wird, und daß der Meßwert ansprechend auf einen externen Befehl von der Aufzeichnungseinrichtung zu der Aufzeichnungseinrichtung übertragen wird.

4. Verfahren nach einem der Ansprüche 1 bis 3, **dadurch gekennzeichnet,** daß ein elektrisches Signal in Abhängigkeit der Betriebstemperatur des Lagers von einem temperaturempfindlichen Teil des Lagers gewonnen wird.

5. Verfahren nach einem der Ansprüche 3 bis 4, **dadurch gekennzeichnet,** daß die Drehung des Lagers erfaßt wird, daß Zeitspannen, während denen das Lager sich dreht, aufgezeichnet werden, und daß ein Gesamtwert, gebildet durch die Summen der Zeitspannen, kontinuierlich gespeichert wird.

6. Vorrichtung zum Aufzeichnen von laufenden Betriebsdaten eines Lagers (10), zum Beispiel der Drehzahl und der Temperatur des Lagers, umfassend eine Dichtungseinrichtung (38), die in dem Lager (10) angebracht ist, um dort einen Raum einzuschließen, und mindestens einen Sensor (11) zum lokalen Erzeugen eines die Betriebsdaten repräsentierenden elektrischen Signals,
**gekennzeichnet durch** eine Zentraleinheit (12), die in dem Raum angeordnet und betrieblich mit dem Sensor (11) gekoppelt ist, um das elektrische Signal in Meßwerte umzuformen, und eine Sendeeinrichtung (16), die in dem Raum angeordnet und betrieblich mit der Zentraleinheit (12) verbunden ist zwecks drahtloser Übertragung der Meßwerte zu mindestens einer von dem Raum entfernten Aufzeichnungseinrichtung,

7. Vorrichtung nach Anspruch 6, **dadurch gekennzeichnet,** daß die Zentraleinheit (12) eine erste Speichereinrichtung (33) zum Speichern von Grenzwerten aufweist, innerhalb derer der Meßwert schwanken kann, ferner eine Vergleichereinrichtung (34) zum Vergleichen des Meßwerts mit den Grenzwerten, und daß die Vergleichereinrichtung betrieblich mit der Sendeeinrichtung (16) gekoppelt ist, um an die Aufzeichnungseinrichtung ein Signal zu senden, wenn der Meßwert außerhalb der Grenzwerte liegt.

8. Vorrichtung nach Anspruch 6 oder 7, **dadurch gekennzeichnet,** daß die Zentraleinheit (12) eine zweite Speichereinrichtung (35) aufweist, um die Meßwerte zu speichern, und daß die Empfangseinrichtung (19) betrieblich mit der Zentraleinheit (12) und der Aufzeichnungseinrichtung (18) gekoppelt ist, um von der Aufzeichnungseinrichtung (18) Steuersignale zu empfangen, welche die Zentraleinheit (12) anweisen, Meßwerte zu der Aufzeichnungseinrichtung (18) zu senden.

9. Vorrichtung nach einem der Ansprüche 6 bis 8, **dadurch gekennzeichnet,** daß mindestens ein Temperatursensor (11) in einem temperaturempfindlichen Bereich des Lagers untergebracht ist oder mit einem solchen Bereich zusammenwirkt, und daß der Temperatursensor (11) betrieblich mit der Zentraleinheit (12) gekoppelt ist.

10. Vorrichtung nach einem der Ansprüche 6 bis 8, **gekennzeichnet durch** einen Generator (13) mit einem Rotor, der mit einem Drehteil des Lagers in Eingriff steht, und einem Stator, der mit einem nicht-drehenden Teil des Lagers in Eingriff steht, oder umgekehrt, um Stromimpulse immer dann zu erzeugen, wenn sich das Lager dreht, wobei die Zentraleinheit (12) eine Zeitmeßeinrichtung zum Messen der Zeitspanne zwischen Stromimpulsen aufweist, ferner eine Berechnungseinrichtung zum Berechnen der Drehzahl des Lagers basierend auf der gemessenen Zeitspanne zwischen den Stromimpulsen.

## Revendications

1. Procédé d'enregistrement des données fonctionnelles instantanées d'un palier (10), telles que la vitesse de rotation ou la température du palier, lesdites données opérationnelles étant obtenues localement au niveau du palier sous forme d'au moins un signal électrique, caractérisé en ce que ledit signal électrique est traité localement à l'intérieur d'un espace étanche (38) situé dans le palier afin de produire au moins une valeur mesurée, et en ce que ladite valeur mesurée est transmise de façon intermittente, par une transmission sans fil, depuis le palier, à au moins un moyen d'enregistrement distant du palier et est enregistrée.

2. Procédé selon la revendication 1, caractérisé en ce qu'au moins une valeur limite est stockée localement au niveau du palier (10), ladite valeur limite constituant la limite de variation de ladite valeur mesurée.

3. Procédé selon la revendication 1 ou 2, caractérisé en ce que ladite valeur mesurée est stockée de façon continue localement au niveau dudit palier (10), et en ce que ladite valeur mesurée est transmise auxdits moyen d'enregistrement en réponse à une instruction externe issue des moyens d'enregistrement.

4. Procédé selon l'une quelconque des revendications 1-3, caractérisé en ce qu'un signal électrique, constituant une réponse à la température de fonctionnement dudit palier, est obtenu depuis une section sensible à la température du palier.

5. Procédé selon l'une quelconque des revendications 3-4, caractérisé en ce que la rotation dudit palier est appréhendée, en ce que les périodes de temps pendant lesquelles ledit palier tourne sont enregistrées, et en ce qu'une valeur totale, formée par la somme desdites périodes, est mémorisée de façon continue.

6. Dispositif d'enregistrement des données fonctionnelles instantanées d'un palier (10), telles que la vitesse de rotation et la température du palier, comprenant des moyens d'étanchéité (38) montés dans le palier (10), afin d'y enfermer un espace, et au moins un capteur (11), destiné à générer localement un signal électrique représentatif desdites données opérationnelles, caractérisé en ce qu'une unité centrale (12) est disposée à l'intérieur dudit espace et est reliée fonctionnellement audit capteur (11) pour transformer le signal électrique en des valeurs mesurées, et par des moyens transmetteurs (16) disposés à l'intérieur dudit espace et reliés fonctionnellement à ladite unité centrale (12) pour effectuer une transmission sans fil desdites valeurs mesurées à au moins un moyen d'enregistrement distant dudit espace.

7. Dispositif selon la revendication 6, caractérisé en ce que ladite unité centrale (12) comprend des premiers moyens de mémoire (33) conçus pour stocker des valeurs limites entre lesquelles ladite valeur mesurée peut fluctuer, et des moyens comparateurs (34) destinés à comparer ladite valeur mesurée auxdites valeurs limites, et en ce que lesdits moyens comparateurs sont reliés fonctionnellement audit moyen transmetteur (16), pour transmettre un signal auxdits moyens d'enregistrement si ladite valeur mesurée tombe hors desdites valeurs limites.

8. Dispositif selon les revendications 6 et 7, caractérisé en ce que ladite unité centrale (12) comprend des deuxièmes moyens de mémoire (35) destinés à mémoriser lesdites valeurs mesurées, et en ce que des moyens récepteurs (19) sont reliés fonctionnellement à ladite unité centrale (12) et auxdits moyens d'enregistrement (18), pour recevoir des signaux de commande venant des moyens d'enregistrement (18), lesdits signaux de commande donnant instruction à ladite unité centrale (12) de transmettre des valeurs mesurées auxdits moyens d'enregistrement (18).

9. Dispositif selon l'une quelconque des revendications 6-8, caractérisé en ce qu'au moins un capteur de température (11) est monté dans une section sensible à la température du palier ou en contact avec une telle section, et en ce que ledit capteur de température est relié fonctionnellement à ladite unité centrale (12).

10. Dispositif selon l'une quelconque des revendications 6-8, caractérisé par un générateur (13), ayant un rotor venant en contact avec une section tournante dudit palier et un stator contact avec une section non-tournante dudit palier, ou vice-versa, afin de générer des impulsions électriques lorsque ledit palier tourne, ladite unité centrale (12) comprenant des moyens de mesure de temps conçus pour mesurer la période de temps s'écoulant entre des impulsions électriques, et des moyens de calcul destinés à calculer la vitesse de rotation dudit palier en se basant sur ladite période de temps mesurée entre lesdites impulsions électriques.
